# EUROPÄISCHE PATENTANMELDUNG

(11) **EP 1 321 682 A1**
(43) Veröffentlichungstag der Anmeldung: **25.06.2003**
(21) Anmeldenummer: 02024332.5
(22) Anmeldetag: 02.11.2002
(51) Int. Cl.: F16C 3/02

(54) **Gelenkwellenvorrichtung**

(30) Priorität: 05.12.2001 DE 10159641
(71) Anmelder: Bayerische Motoren Werke Aktiengesellschaft, 80809 München (DE)
(72) Erfinder: Furchtbar, Felix, 81247 München (DE); Streinz, Wolfgang, 84034 Landshut (DE); Winzinger, Wilhelm, 84061 Siegensdorf (DE)

(57) **Zusammenfassung**

Gelenkwellenrohr aus faserverstärktem Kunststoff, an dessen Ende ein Anschlusselement mit einem auf das Gelenkwellenende aufgeschobenen Nabenabschnitt vorgesehen ist, wobei in das Ende der Gelenkwelle ein Pressbolzen eingepresst ist. Der Pressbolzen erzeugt einen radialen Innendruck und weitet das Gelenkwellenende geringfügig auf, wodurch zwischen der Außenseite des Gelenkwellenendes und der Innenseite des Nabenabschnitts des Anschlusselements eine hinreichend hohe Pressung erzeugt wird, die eine Drehmomentübertragung ermöglicht.

## Beschreibung

Die vorliegende Erfindung betrifft eine Gelenkwellenvorrichtung gemäß dem Oberbegriff des Patentanspruches 1.

Aus der DE 196 13 857 A1 ist eine Gelenkwelle aus faserverstärktem Kunststoff bekannt, an deren Enden jeweils ein Anschlusselement, beispielsweise ein Kardangelenk angeordnet ist. Im Bereich der Gelenkwellenenden ist eine axial verlaufende Innenprofilierung vorgesehen, die wie eine Keilverzahnung bzw. wie ein Kerbzahnprofil gestaltet ist. Das Anschlusselement weist einen zapfenartigen Abschnitt mit einer zu der Innenprofilierung komplementären Außenprofilierung auf, der in das Gelenkwellenende eingeschoben ist. Zur Axialsicherung kann vorgesehen sein, dass der Zapfen mit dem Gelenkwellenende verklebt ist.

Ferner sind aus dem Kfz- bzw. Motorradbereich diverse Gelenkwellenvorrichtungen bekannt, bei denen die Gelenkwellen aus Stahl bzw. Aluminium hergestellt sind. Um eine gewisse Torsionselastizität zu erreichen, sind manche Gelenkwellen "zweiteilig" ausgeführt, mit einem hohlzylindrischen Außenrohr und einem Innenrohr, zwischen denen ein elastisches Torsionselement angeordnet ist. Bei Gelenkwellen, die im PKW-Bereich eingesetzt werden, ist üblicherweise an einem Gelenkwellenende eine elastische Scheibe, eine sogenannte "Hardy-Scheibe" angeordnet, die eine gewisse Torsionselastizität des Gelenkwellenstranges sicherstellt.

Aufgabe der Erfindung ist es, eine Gelenkwellenvorrichtung zu schaffen, die konstruktiv einfach aufgebaut ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer hohlen Gelenkwelle aus faserverstärktem Kunststoff, an deren Ende ein Anschlusselement mit einem auf das Gelenkwellenende aufgeschobenen Nabenabschnitt vorgesehen ist, wobei in das Ende der Gelenkwelle ein Pressbolzen eingepresst ist. Der Pressbolzen erzeugt einen radialen Innendruck und weitet das Gelenkwellenende geringfügig auf, wodurch zwischen der Außenseite des Gelenkwellenendes und der Innenseite des Nabenabschnitts des Anschlusselements eine hinreichend hohe Pressung erzeugt wird, die eine Drehmomentübertragung ermöglicht.

Vorzugsweise ist an der Innenseite des Nabenabschnitts eine Oberflächenprofilierung vorgesehen, die zusätzlich zu dem Reibschluss einen Formschluss sicherstellt, was die Übertragung noch größerer Drehmomente ermöglicht. Die Oberflächenprofilierung kann beispielsweise durch in Axialrichtung verlaufende kerbzahnartige Erhebungen gebildet sein, die radial nach innen vom Normabschnitt abstehen.

Vorzugsweise weist der Außendurchmesser des Gelenkwellenendes in Bezug auf den Innendurchmesser des Nabenabschnitts ein gewisses Übermaß auf. Bei der Herstellung der Gelenkwellenvorrichtung wird das Gelenkwellenende in das Anschlusselement eingepresst. Anschließend wird der Pressbolzen in das Innere des Gelenkwellenendes eingepresst, wodurch sich die Pressung zwischen dem Gelenkwellenende und dem Nabenabschnitt in definierter Weise erhöht.

Eine weitere Erhöhung des übertragbaren Drehmoments kann durch Verkleben des Gelenkwellenendes mit dem Nabenabschnitt erreicht werden. Zusätzlich kann der Pressbolzen in das Gelenkwellenende eingeklebt sein.

Die Gelenkwelle an sich kann aus einem faserverstärkten Kunststoffmaterial hergestellt werden. Die mechanischen Eigenschaften der Gelenkwelle, insbesondere die Torsionsfestigkeit können dabei durch die Materialwahl und die "Wicklung" sowie den Durchmesser und die Wandstärke des Gelenkwellenrohrs gezielt "eingestellt" werden.

An jedem der beiden Enden der Gelenkwelle kann ein Kardangelenk als "Anschlusselement" vorgesehen sein. Die Kardangelenke können beispielsweise aus Aluminium hergestellt sein. Im Vergleich zur Gelenkwelle weisen sie eine vernachlässigbar geringe Torsionselastizität auf.

Eine Gelenkwellenvorrichtung gemäß der Erfindung hat im Vergleich zum Stand der Technik einen kleinen Durchmesser. Aufgrund des geringen spezifischen Gewichts des faserverstärkten Kunststoffmaterials ist im Vergleich zu Gelenkwellen aus Metall selbst bei großen Wandstärken ein geringes Gesamtgewicht erzielbar. Die Torsionselastizität kann insbesondere durch den "Wickelwinkel" eingestellt werden. Ein "Gummipaket" oder ähnliche zusätzliche torsionselastische Elemente sind bei einer derartigen Gelenkwellenvorrichtung nicht erforderlich.

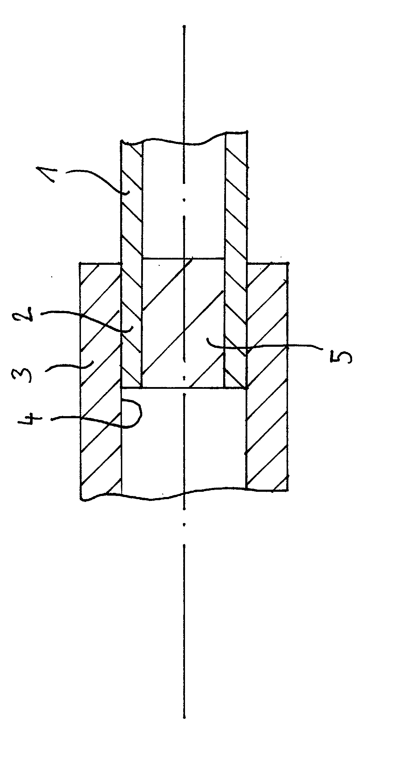

Im folgenden wird die Erfindung anhand eines Ausführungsbeispiels im Zusammenhang mit der einzigen Figur erläutert.

Die **Figur** zeigt eine hohle Gelenkwelle 1, die aus einem faserverstärkten Kunststoffmaterial gewickelt und geklebt ist. Das Gelenkwellenende 2 ist in einen nabenartigen Abschnitt 3 eines hier nicht näher dargestellten Anschlusselements eingeschoben. Der Außendurchmesser des Gelenkwellenendes 2 weist in Bezug auf den Innendurchmesser des nabenartigen Abschnitts 3 ein geringes Übermaß auf, so dass bereits beim Einpressen des Gelenkwellenendes ein gewisser Reibschluss erzeugt wird.

Zusätzlich ist an der Innenseite 4 des nabenartigen Abschnitts eine hier nicht näher dargestellte Innenprofilierung vorgesehen, die einen Formschluß zwischen dem Gelenkwellenende 2 und dem nabenartigen Abschnitt 3 erzeugt und somit das übertragbare Drehmoment weiter erhöht.

Ferner ist ein Pressbolzen 5 vorgesehen, der bei der Montage in das Gelenkwellenende 2 eingepresst wird. Der Pressbolzen 5 weist in Bezug auf den Innendurchmesser des Gelenkwellenendes 2 ein gewisses Übermaß auf. Beim Einpressen wird das Gelenkwellenende 2 aufgeweitet. Hierdurch erhöht sich der Pressdruck zwischen dem Gelenkwellenende 2 und dem nabenartigen Abschnitt 3. Zusätzlich ist das Gelenkwellenende 2 mit dem nabenartigen Abschnitt 3 verklebt, was eine weitere Erhöhung des übertragbaren Drehmoments bringt. Der Pressbolzen 5 kann ebenfalls in das Gelenkwellenende 2 eingeklebt sein.

Eine derartige Gelenkwellenvorrichtung weist im Vergleich zum Stand der Technik ein relativ geringes Gewicht auf und ist kostengünstig herstellbar.

## Patentansprüche

1. Gelenkwellenvorrichtung mit einer hohlen Gelenkwelle aus faserverstärktem Kunststoff und einem Anschlusselement, das drehfest mit einem Ende der Gelenkwelle verbunden ist, **dadurch gekennzeichnet, dass** das Anschlusselement einen Nabenabschnitt (3) aufweist, der die Gelenkwelle (2) von außen umgreift und dass in das Ende (2) der Gelenkwelle (1) im Bereich des Nabenabschnitts (3) ein Pressbolzen (5) eingepresst ist.

2. Gelenkwellenvorrichtung nach Anspruch 1, **dadurch gekennzeichnet, dass** an einer Innenseite (4) des Nabenabschnitts (3) eine Oberflächenprofilierung vorgesehen ist.

3. Gelenkwellenvorrichtung nach Anspruch 2, **dadurch gekennzeichnet, dass** die Oberflächenprofilierung durch in Axialrichtung verlaufende kerbzahnprofilartige Erhebungen gebildet ist.

4. Gelenkwellenvorrichtung nach einem der Ansprüche 1 bis 3, **dadurch gekennzeichnet, dass** das Ende (2) der Gelenkwelle (1) in Bezug auf den Innendurchmesser des Nabenabschnitts (3) ein Übermaß aufweist und in den Nabenabschnitt (3) eingepresst ist.

5. Gelenkwellenvorrichtung nach einem der Ansprüche 1 bis 4, **dadurch gekennzeichnet, dass** das Ende (2) der Gelenkwelle (1) mit der Innenseite des Nabenabschnitts (3) verklebt ist.

6. Gelenkwellenvorrichtung nach einem der Ansprüche 1 bis 5, **dadurch gekennzeichnet, dass** der Pressbolzen (5) in das Ende (2) der Gelenkwelle (1) eingeklebt ist.

7. Gelenkwellenvorrichtung nach einem der Ansprüche 1 bis 6, **dadurch gekennzeichnet, dass** die Gelenkwelle (1) aus glasfaserverstärktem Kunststoff besteht.

8. Gelenkwellenvorrichtung nach einem der Ansprüche 1 bis 7, **dadurch gekennzeichnet, dass** die Gelenkwelle (1) ein Rohr ist, das aus glasfaserverstärktem Kunststoffmaterial gewickelt ist.

9. Gelenkwellenvorrichtung nach einem der Ansprüche 1 bis 8, **dadurch gekennzeichnet, dass** das Anschlusselement aus Aluminium ist.

10. Gelenkwellenvorrichtung nach einem der Ansprüche 1 bis 9, **dadurch gekennzeichnet, dass** an beiden Enden (2) der Gelenkwelle ein Anschlusselement angebracht ist.

11. Gelenkwellenvorrichtung nach einem der Ansprüche 1 bis 10, **dadurch gekennzeichnet, dass** eine für die Gelenkwellenvorrichtung vorgegebene Torsionselastizität primär allein durch die glasfaserverstärkte Gelenkwelle (1) festgelegt ist, wohingegen das bzw. die Anschlusselemente im wesentlichen torsionsstarr sind.
